# EUROPÄISCHE PATENTSCHRIFT

(11) **EP 1 563 239 B1**
(45) Veröffentlichungstag und Bekanntmachung des Hinweises auf die Patenterteilung: **21.03.2007**
(21) Anmeldenummer: 03810451.9
(22) Anmeldetag: 06.11.2003
(51) Int. Cl.: F28D 1/04, F28D 1/053, F28F 9/02, F28F 9/26, B60H 1/00

(54) **WÄRMETAUSCHER**
HEAT EXCHANGER
ECHANGEUR DE CHALEUR

(30) Priorität: 07.11.2002 DE 10252263
(43) Veröffentlichungstag der Anmeldung: 17.08.2005
(73) Patentinhaber: Behr GmbH & Co. KG, 70469 Stuttgart (DE)
(72) Erfinder: DEMUTH, Walter, 70839 Gerlingen (DE); KOTSCH, Martin, 71634 Ludwigsburg (DE); STAFFA, Karl-Heinz, 70567 Stuttgart (DE); WALTER, Christoph, 70469 Stuttgart (DE); WÖLK, Gerrit, 70180 Stuttgart (DE)
(74) Vertreter: Grauel, Andreas
(86) Internationale Anmeldenummer: PCT/EP2003/012440
(87) Internationale Veröffentlichungsnummer: WO 2004/042308

(56) Entgegenhaltungen:
- WO-A-20/04005826
- DE-A- 19 911 334
- US-A- 6 021 846

## Beschreibung

Die Erfindung betrifft eine Vorrichtung zum Austausch von Wärme, insbesondere für den Einsatz in Klimaanlagen und insbesondere für den Einsatz in Klimaanlagen, die als Kältemittel ein Fluid aufweisen, welches beispielsweise wenigstens Kohlendioxid als einen Bestandteil aufweist.

Derartige Vorrichtungen zum Austausch von Wärme werden beispielsweise zum Abkühlen oder Kondensieren von Kältemittel verwendet.

Die Beschreibung der Erfindung und der zugrundeliegenden technischen Probleme erfolgt nachfolgend am Beispiel einer Kraftfahrzeugklimaanlage. Es wird aber darauf hingewiesen, daß die erfindungsgemäße Vorrichtung auch für andere Anwendungszwecke geeignet ist.

Aus dem Stand der Technik sind Klimaanlagen in Kraftfahrzeugen bekannt. Diese Klimaanlagen.verwenden ein Kältemittel, welches zur Abkühlung der Luft für den Fahrzeuginnenraum dient. Derartige Kältemittel sind z. B. Fluorchlorkohlenwasserstoff. Klimaanlagen, die mit solchen Kältemitteln betrieben werden, weisen jedoch den Nachteil auf, daß sie einen signifikanten Anstieg des Treibstoffverbrauches eines Kraftfahrzeugs bewirken. Darüber hinaus weisen diese herkömmlichen Kältemittel ein sehr hohes Treibhauspotential auf, so daß durch den Einsatz dieser Kältemittel auch Schädigungen der Umwelt durch den Treibhauseffekt erhöht werden. Aus diesem Grunde wird in jüngerer Zeit auf ein weiteres Kältemittel, nämlich Kohlendioxid (CO₂) zurückgegriffen. Im Vergleich zu den vorgenannten Kältemitteln weist Kohlendioxid ein deutlich geringeres Treibhauspotential auf. Weiterhin bewirkt Kohlendioxid, da es sich dabei um ein natürliches Gas handelt, keine Ozonschädigung. Schließlich ist durch eine Verwendung von Kohlendioxid als Kältemittel auch eine Verringerung des Treibstoffverbrauchs des Kraftfahrzeugs möglich.

Das Dokument US 6 021 846 offenbart eine Vorrichtung nach dem Oberbegriff des Anspruchs 1. Das zwischenveröffentlichte Dokument WO 2004/005826 A1 zeigt eine ähnliche Vorrichtung.

Bei der Verwendung von Kohlendioxid als Kältemittel müssen jedoch sehr hohe Drücke im Bereich von bis zu mehr als 130 bar erzeugt werden. Daher steigt die Druckbelastung einzelner Komponenten einer Klimaanlagen erheblich an, wodurch eine höhere Stabilität nötig wird.

Der Erfindung liegt daher die Aufgabe zugrunde, eine gegenüber dem Stand der Technik verbesserte Vorrichtung zum Austausch von Wärme zur Verfügung zu stellen.

Die Aufgabe wird erfindungsgemäß durch den Gegenstand des Hauptanspruchs 1 gelöst. Vorteilhafte Weiterentwicklungen sind Gegenstand der Unteransprüche.

In einer Ausführungsform weist eine Vorrichtung zum Austausch von Wärme, insbesondere für den Einsatz in Kraftfahrzeugen und insbesondere für den Einsatz in Kraftfahrzeugklimaanlagen, die als Kältemittel ein Fluid aufweisen, welches aus wenigstens einem Bestandteil aus einer Gruppe von Gasen, welche insbesondere Kohlendioxid, Stickstoff, Sauerstoff, Luft, Ammoniak, Kohlenwasserstoffe, insbesondere Methan, Propan, n-Butan und Flüssigkeiten, insbesondere Wasser, Fluide, Sole etc. umfaßt, aufweist, eine Zu- sowie eine Ableitung auf, um das Fluid in die Vorrichtung einzuleiten bzw. um das Fluid aus der Vorrichtung abzuleiten. In einer besonders bevorzugten Ausführungsform wird als Kältemittel Kohlendioxid verwendet, welches sich durch seine physikalischen und chemischen Eigenschaften, wie beispielsweise die Nichtbrennbarkeit, auszeichnet.

Weiterhin weist die erfindungsgemäße Vorrichtung zum Austausch von Wärme wenigstens zwei Wärmetauschereinheiten auf, wobei jede diese Wärmetauschereinheiten wenigstens zwei Verteilungs- bzw. Sammelraume und wenigstens eine Durchflußeinrichtung aufweist, wobei das Fluid durch die Durchflußeinrichtung zwischen den Verteilungs- bzw. Sammelräumen fließen kann.

Weiterhin weist jede diese Wärmetauschereinheiten wenigstens eine Trenneinrichtung auf, welche wenigstens einen Verteilungs- bzw. Sammelraum in zwei Teilräume unterteilt.

Daneben weist die Vorrichtung eine Strömungsverbindungseinrichtung auf, welche die Wärmetauschereinheiten derart miteinander verbindet, daß das Kältemittel zwischen den Wärmetauschereinheiten fließen kann, wobei die Strömungsquerschnitte bzw. die Summen der Strömungsquerschnitte vor und nach der Strömungsverbindungseinrichtung ein vorgegebenes Verhältnis zueinander annehmen. Dieses Verhältnis richtet sich dabei insbesondere nach der Position der Strömungsverbindungseinrichtung.

In einer weiteren bevorzugten Ausführungsform weist die Durchflußeinrichtung wenigstens einen ersten endseitigen Strömungsverbindungsabschnitt, durch welchen das Fluid in die Durchflußeinrichtung eintritt bzw. aus der Durchflußeinrichtung austritt, auf.

Des weiteren ist ein zweiter endseitiger Strömungsverbindungsabschnitt vorgesehen, durch welchen das Fluid aus der Durchflußeinrichtung austritt bzw. in die Durchflußeinrichtung eintritt. Der erste Strömungsverbindungsabschnitt und der zweite Strömungsverbindungsabschnitt sind miteinander durch wenigstens einen Rohrabschnitt strömungsverbunden.

Unter dem Begriff "strömungsverbunden" wird im Rahmen dieser Erfindung verstanden, daß ein Fluid zwischen zwei strömungsverbundenen Abschnitten fließen kann.

In einer weiteren bevorzugten Ausführungsform weist der Rohrabschnitt wenigstens einen geraden Abschnitt auf, und ist bevorzugt entlang seiner gesamten Länge linear. Der Rohrabschnitt kann jedoch auch neben geraden Abschnitten einen oder mehrere gekrümmte Abschnitte aufweisen.

In einer besonders bevorzugten Ausführungsform ist wenigstens einer der genannten endseitigen Strömungsverbindungsabschnitte wenigstens einmal tordiert. Dabei wird unter dem Begriff "tordieren" verstanden, daß ein Bauelement entlang seiner Längsrichtung um einen bestimmten vorgegebenen Winkel gedreht bzw. verdrillt wird. Dabei kann die Mittelachse versetzt sein.

In einer weiteren besonders bevorzugten Ausführungsform wird die Vorrichtung zum Austausch von Wärme vollständig, jedoch wenigstens die Durchflußeinrichtung als Bauteil der Vorrichtung, von einem vorzugsweise gasförmigen Medium, insbesondere von Luft, umströmt.

Unter einem Sammelraum im Sinne der vorliegenden Erfindung wird eine Einrichtung verstanden, welche dazu geeignet ist, ein ihr aus wenigstens einer, bevorzugt mehreren Komponenten, zugeführtes Medium zu sammeln. Der Verteilungsraum dient dazu, ein in diesen eingeleitetes Fluid auf wenigstens eine, bevorzugt mehrere Einrichtungen bzw. Durchflußeinrichtungen zu verteilen.

In einer weiteren bevorzugten Ausführungsform weist die Durchflußeinrichtung wenigstens einen Strömungskanal, vorzugsweise eine Vielzahl von Strömungskanälen zur Weiterleitung des Kältemittels auf und hat bevorzugt einen flachrohrartigen Querschnitt.

Unter flachrohrartig im Sinne dieser Erfindung wird dabei verstanden, daß der Querschnitt im wesentlichen die Form eines Rechtecks oder einer Ellipse hat, wobei die längere Seite dieses Rechtecks größer als die kleinere Seite ist bzw. die längere Halbachse länger als die kürzere Halbachse ist.

Gemäß einer bevorzugten Ausführungsform sind die Übergänge zwischen den Querschnittsseiten abgerundet.

In einer weiteren besonders bevorzugten Ausführungsform sind mehrere Wärmetauschereinheiten vorgesehen, welche jeweils mit Strömungsverbindungseinrichtungen verbunden sind. Bevorzugt sind die mehreren Wärmetauschereinheiten jeweils paarweise durch Strömungsverbindungseinrichtungen verbunden

Besonders bevorzugt beträgt dabei die Anzahl der Wärmetauschereinheiten n, die Anzahl der Strömungsverbindungseinrichtung n-1. Es können jedoch auch mehrere Strömungsverbindungseinrichtungen zwischen den einzelnen Wärmetauschereinheiten vorgesehen sein.

In einer weiteren bevorzugten Ausführungsform sind die Zuleitung und die Ableitung für das Kältemittel an zwei unterschiedlichen Verteilungs- bzw. Sammelräumen angeordnet.

In einer besonders bevorzugten Ausführungsform erstrecken sich die Zuleitung und die Ableitung für das Kältemittel entlang der Längsrichtung der Verteilungs- und Sammelräume, an denen sie angeordnet sind.

In einer weiteren besonders bevorzugten Ausführungsform ist eine Rahmeneinrichtung vorgesehen, welche die einzelnen Wärmetauschereinheiten kraft-, form- und/oder stoffschlüssig miteinander verbindet.

In einer bevorzugten Ausführungsform weisen der Verteilungsraum und/oder der Sammelraum Aufnahmeeinrichtungen bzw. Durchführungseinrichtungen auf, wobei der Innenquerschnitt der Aufnahmeeinrichtungen im wesentlichen dem Außenquerschnitt der Durchflußeinrichtung entspricht. Dabei ist besonders bevorzugt der Außenquerschnitt der Durchflußeinrichtung geringfügig kleiner als der Innenquerschnitt der Aufnahmeeinrichtungen, so daß die Durchflußeinrichtung bevorzugt mehrere Durchflußeinrichtungen in die einzelnen Aufnahmeeinrichtungen eingeschoben oder durch diese hindurchgeschoben werden können. Die Aufnahmeeinrichtung kann auch als Durchführungseinrichtung ausgeführt sein, so daß die Durchflußeinrichtung durch die Aufnahmeeinrichtung hindurch in den Sammel- und/oder Verteilungsraum eingeschoben wird. Die Aufnahmeeinrichtung kann auch so ausgeführt sein, daß mehrere Flachrohre in ihr aufgenommen werden können.

In einer weiteren bevorzugten Ausführungsform weisen die Aufnahmeeinrichtungen eine im wesentlichen rechteckige oder ellipsenförmige Gestalt auf, wobei die längere Seite dieser im wesentlichen rechteckigen oder ellipsenförmigen Aufnahmeeinrichtungen zu der Längsrichtung der Verteilungs- und Sammeleinrichtung in einem vorbestimmten Winkel angeordnet sind.

Unter der Längsrichtung der Verteilungs-/Sammeleinrichtung wird dabei die Richtung verstanden, in die sich der Verteilungs-/Sammelraum im wesentlichen erstreckt.

In einer weiteren bevorzugten Ausführungsform beträgt dieser vorbestimmte Winkel dem Betrag nach zwischen der Längsrichtung des Verteilungs-/Sammelraums zwischen 0 und 90 Grad, vorzugsweise zwischen 0 und 45 Grad und besonders bevorzugt zwischen 0 und 10 Grad. Dabei wird eine Verdrehung der Aufnahmeeinrichtung gegenüber der Längsrichtung im Uhrzeigersinn durch einen positiven Winkel angezeigt.

In einer weiteren bevorzugten Ausführungsform werden mehrere Durchflußeinrichtungen im wesentlichen parallel zueinander angeordnet. Unter einer parallelen Anordnung wird dabei verstanden, daß der jeweils abgeflachte Teil der flachrohrartigen Durchflußeinrichtung im wesentlichen parallel zu dem abgeflachten Teil der übrigen Durchflußeinrichtungen steht. In einer weiteren bevorzugten Ausführungsform sind zwischen den Durchflußeinrichtungen Kühlrippen vorgesehen, welche den Wärmeaustausch mit der durch- bzw. umströmenden Luft begünstigen.

Besonders bevorzugt sind zwischen den einzelnen Durchflußeinrichtungen Einrichtungen zum Austausch von Wärme, wie z. B. Kühlrippen, Fahnen oder Lamellen vorgesehen.

In einer weiteren bevorzugten Ausführungsform ist die Strömungsverbindungseinrichtung gegenüber der Längsrichtung der Verteilungs- bzw. Sammelräume in einem vorgegebenen Winkel angeordnet. Dieser vorgegebene Winkel liegt dabei im Bereich zwischen 0 und 90 Grad, bevorzugt zwischen 0 bis 45 Grad und besonders bevorzugt im Bereich von etwa 30 Grad.

Durch die Verwendung der Trenneinrichtungen und der Strömungsverbindungseinrichtung wird erreicht, daß sich das Kältemittel nicht sofort entlang der gesamten Länge der Vorrichtung ausbreitet, sondern daß die einzelnen Durchflußeinrichtungen abschnittsweise und hintereinander von dem Kältemittel durchströmt werden, was nachfolgend genauer beschrieben wird.

In einer besonders vorteilhaften Ausführungsform wird die Trenneinrichtung und die Strömungsverbindungseinrichtung derart angeordnet, daß zunächst ein erster der durchströmenden Luft abgewandter Abschnitt durchströmt wird, dann ein zweiter der durchströmenden Luft abgewandter Abschnitt, danach ein erster der durchströmenden Luft zugewandter Abschnitt und danach der zweite der durchströmenden Luft zugewandte Abschnitt. Alternativ ist es auch möglich, zunächst die der Luft abgewandten Abschnitte und danach die der Luft zugewandeten Abschnitte von dem Kältemittel durchfließen zu lassen.

Diese Ausführungsform ist besonders vorteilhaft, wenn die Fluidtemperatur auf dem Strömungsweg einen Temperaturunterschied (Temperaturgang) erfährt, wobei bei einem Gaskühler, welcher insbesondere mit einem Fluid (z. B. CO₂) in einem überkritischen Bereich betrieben wird, die Fluidtemperatur entlang des Strömungsweges abnimmt. Durch die Anordnung der Zuleitung am der Luft abgewandten Teil des Wärmeübertragers und die-Anordnung der Ausleitung am der Luft zugewandten Teil des Wärmeübertragers ist sichergestellt, dass über den gesamten Strömungsweg des Fluids - vom Zulauf bis zum Ablauf - eine optimierte treibende Temperaturdifferenz zwischen dem durch den Wärmeübertrager strömenden Fluid und dem Luftstrom vorhanden ist. Zudem sind durch diese Anordnung alle ausgangsseitigen Rohre direkt mit dem kühleren Luftstrom kontaktiert.

In einer weiteren Ausführungsform können durch den Einsatz mehrerer Trenneinrichtungen in den einzelnen Verteilungs- und Sammelräumen mehrere der obengenannten Abschnitte gebildet werden, und auf diese Weise das Kältemittel öfters kreuzgegenstromartig durch die Verbindungen geleitet werden. Ferner ist es auch möglich, mehrere Strömungsverbindungseinrichtungen zwischen zwei Wärmetauschereinheiten vorzusehen, um so das Kältemittel öfter zwischen den einzelnen Wärmetauschereinheiten hin und her zu leiten.

In einer weiteren bevorzugten Ausführungsform ist die Durchflußeinrichtung wenigstens aus einem Material aus einer Gruppe von Materialien hergestellt, welche Metalle; insbesondere Aluminium, Mangan, Silizium, Magnesium, Eisen, Messing, Kupfer, Zinn, Zink, Titan, Chrom, Molybdän, Vanadium und Legierungen hieraus, insbesondere Aluminium - Knetlegierungen mit einem Siliziumgehalt von 0 bis 0,7 % und einem Magnesiumgehalt zwischen 0,0 und 1 %, bevorzugt zwischen 0,0 % und 0,5 % und besonders bevorzugt zwischen 0,1 % und 0,4 %, vorzugsweise EN-AW 3003, EN-AW 3102, EN-AW 6060 und EN-AW 1100, Kunststoffe, faserverstärkte Kunststoffe, Verbundwerkstoffe etc. enthält.

In einer weiteren Ausführungsform sind mehrere, bevorzugt Wärmetauschereinheiten vorgesehen, welche voneinander thermisch getrennt sind.

Unter einer thermischen Trennung wird ein Zustand verstanden, der eine Wärmeübertragung zwischen beteiligten Komponenten, also beispielsweise zwei Wärmetauschereinheiten vollständig oder zumindest weitgehend verhindert. In einer bevorzugten Ausführungsform wird die thermische Trennung der Wärmetauschereinheiten dadurch erreicht, daß der Verteilungs- und der Sammelraum zueinander beabstandet sind und so ein Luftspalt zwischen der Räumen gebildet wird.

In einer weiteren Ausführungsform werden die Wärmetauschereinheiten mittels einer Rahmeneinrichtung beabstandet gehalten. Es können auch brückenartige Verbindungen zwischen den Wärmetauschereinheiten vorgesehen werden, um diese beabstandet zu halten.

In einer weiteren besonders bevorzugten Ausführungsform wird zwischen den Wärmetauschereinheiten ein Material angebracht, welches eine thermische Trennung zwischen dem Verteilungsraum und dem Sammelraum bewirkt und der Verteilungsraum sowie der Sammelraum über dieses Material stoffschlüssig miteinander verbunden.

Die Erfindung ist weiterhin auf eine Einrichtung zum Austausch von Wärme gerichtet, insbesondere für Kraftfahrzeugklimaanlagen mit Lüftströmungswegen, Luftströmungssteuerelementen, wenigstens einer Luftfördereinrichtung und einem Gehäuse, welches zur Aufnahme wenigstens einer erfindungsgemäßen Vorrichtung zum Austausch von Wärme vorbereitet ist und innerhalb dessen eine solche Vorrichtung zum Austausch von Wärme angeordnet ist.

Bevorzugt ist die Erfindung auf eine Einrichtung zum Austausch von Wärme gerichtet, insbesondere für Kraftfahrzeugklimaanlagen mit wenigstens einem Verdampfer, einem Verdichter, einem Expansionsventil, einem Sammler und wenigstens einer erfindungsgemäßen Vorrichtung zum Austausch von Wärme.

Die Erfindung wird nachfolgend im Ausführungsbeispiel anhand der zugehörigen Zeichnungen näher erläutert.

Dabei zeigen:
- Fig. 1: eine schematische Darstellung einer Vorrichtung zum Austausch von Wärme gemäß der Erfindung;
- Fig. 2: eine schematische Darstellung einer Durchflußeinrichtung für die erfindungsgemäße Vorrichtung
- Fig. 3: eine schematische Draufsicht auf einen einseitigen Strömungsverbindungsabschnitt für eine Vorrichtung zum Austausch von Wärme;
- Fig. 4: eine schematische Darstellung eines Sammelraums bzw. eines Verteilungsraums für eine Vorrichtung zum Austausch von Wärme gemäß der vorliegenden Erfindung;
- Fig. 4a: eine Darstellung entlang der Linie A-A in Fig. 4;
- Fig. 5: eine Seitenansicht der Darstellung aus Figur 1;
- Fig. 6: eine schematische-Darstellung der Flußrichtungen in der Vorrichtung zum Austausch von Wärme nach Fig. 5.
- Fig. 7: eine perspektivische Darstellung einer erfindungsgemäßen Strömungsverbindungseinrichtung;
- Fig. 7a: eine weitere Darstellung der Strömungsverbindungseinrichtung aus Fig. 7; und
- Fig. 7b: eine weitere Darstellung der Strömungsverbindungseinrichtung aus Fig. 7.

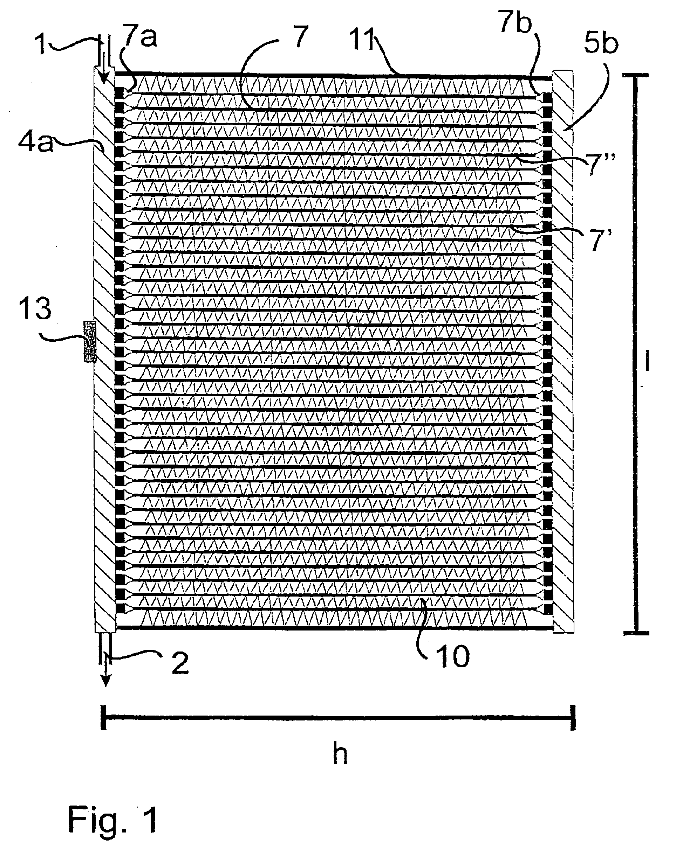

Fig. 1 zeigt eine Darstellung einer Vorrichtung zum Austausch von Wärme gemäß der vorliegenden Erfindung. Die Vorrichtung weist eine Zuleitung 1 sowie eine Ableitung 2 auf. Die Zuleitung 1 mündet in einem Verteilungs- bzw. Sammelraum 4b derart, daß sie mit diesem Raum strömungsverbunden ist. Unter einem Verteilungs- bzw. Sammelraum wird ein im wesentlichen in Längsrichtung begrenztes Volumenelement verstanden. Dieses Volumenelement kann sich entlang der gesamten Länge 1 der Vorrichtung erstrecken, kann jedoch auch eine kürzere Länge aufweisen, wenn beispielsweise Trennvorrichtungen vorgesehen sind. Das Bezugszeichen 7 kennzeichnet eine Durchflußeinrichtung, durch welche ein Fluid fließen kann. Bevorzugt werden mehrere dieser Durchflußeinrichtungen 7, 7', 7" in der Vorrichtung zum Austausch von Wärme angeordnet. Zwischen diesen Durchflußvorrichtungen sind Kühlrippen 10 vorgesehen.

Die Hauptströmungsrichtung der durch die Vorrichtung hindurchfließenden , bzw. der die Vorrichtung umströmenden Luft ist im wesentlichen senkrecht zur Strömungsfläche des Fluids in Fig. 1.

Diese Kühlrippen weisen bevorzugt (in der Darstellung nicht gezeigte) Kiemen auf, welche den Wärmeaustausch mit der sie umströmenden Luft weiter insbesondere durch Erzeugung von Turbulenzen begünstigen. Die Rippendichte der Kühlrippen beträgt 10 bis 150 Rippen pro Dezimeter, bevorzugt 45 bis 100 Rippen pro Dezimeter und besonders bevorzugt 50 bis 95 Rippen pro Dezimeter.

Die Kiemen weisen eine Länge von 1 mm bis 20 mm, bevorzugt zwischen 2 mm und 15 mm, besonders bevorzugt von 3,5 mm bis 12 mm auf. Die Breite der Lamellenschlitze liegt zwischen 0,05 mm und 0,5 mm, bevorzugt zwischen 0,1 mm und 0,4 mm und besonders bevorzugt zwischen 0,2 mm und 0,3 mm.

In der Darstellung bilden der Verteilungs- bzw. Sammelraum 4b, der Verteilungs- bzw. Sammelraum 5b sowie der oder die diese beiden Verteilungs- bzw. Sammelräume verbindende oder verbindenden Durchflusseinrichtungen 7 eine Wärmetauschereinheit. In der gezeigten Fig. sind daher zwei Wärmetauschereinheiten vorhanden. Dabei können die Wärmeübertragereinheiten jeweils eigene Kühlrippen oder eine gemeinsame Kühlrippen aufweisen.

Das Bezugszeichen 11 kennzeichnet eine Rahmeneinrichtung, welche zumindest teilweise form-, kraft- und/oder stoffschlüssig mit dem Sammelraum und/oder dem Verteilungsraum verbunden sein kann. Das Bezugszeichen 13 bezieht sich auf eine Durchflußverbindungseinrichtung, welche zwei der Verteilungs- bzw. Sammelräume in Strömungsverbindung bringt.

Die Zuleitung und die Ableitung sind entlang einer bestimmten Richtung, hier an der im wesentlichen gleichen Höhe h der Vorrichtung angeordnet. Unter im wesentlichen höhengleich wird verstanden, dass der Abstand der Zu- und der Ableitung entlang der Richtung h der Vorrichtung kleiner ist als die Höhe h der Vorrichtung, bevorzugt kleiner ist als die Hälfte der Höhe h der Vorrichtung und besonders bevorzugt kleiner ist als 1/10 der Länge der Vorrichtung.

Die Verteilungs- bzw. Sammelräume 4b und 5b sind über wenigstens eine, bevorzugt mehreren Durchflußeinrichtungen 7 miteinander strömungsverbunden. Die Durchflußeinrichtung weist einen im wesentlichen flachrohrartigen. Querschnitt auf sowie einen Strömungskanal bzw. eine Vielzahl von Strömungskanälen zur Weiterleitung des Kältemittels. Die einzelnen Strömungskanäle weisen dabei einen im wesentlichen kreis- oder ellipsenförmigen Querschnitt auf.

Die Höhe der einzelnen Kanäle liegt zwischen 0,2 mm und 3 mm, bevorzugt zwischen 0,5 mm und 2 mm und besonders bevorzugt zwischen 0,6 mm und 1,8 mm.

Der hydraulische Durchmesser liegt zwischen 0,1 mm und 3 mm, bevorzugt zwischen 0,4 mm und 2 mm und besonders bevorzugt zwischen 0,6 mm und 1,8 mm.

Der Abstand zwischen den einzelnen Durchflußeinrichtungen entlang der Richtung 1 aus Fig. 1 liegt zwischen 2 mm und 30 mm, bevorzugt zwischen 4 mm und 20 mm und besonders bevorzugt zwischen 6 mm und 14 mm.

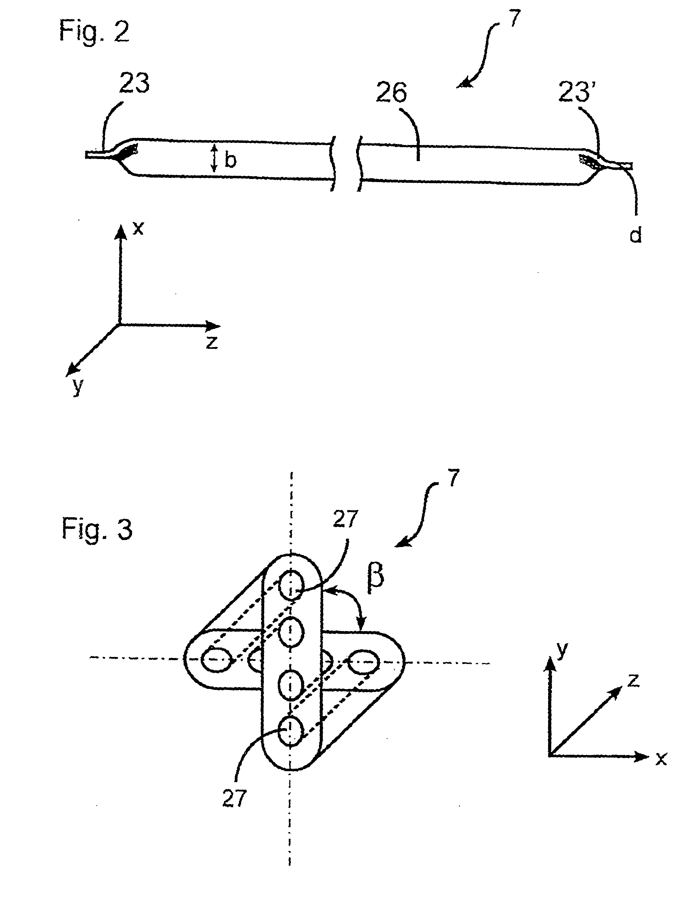

Fig. 2 zeigt eine schematische Darstellung einer Durchflußeinrichtung für eine Vorrichtung zum Austausch von Wärme gemäß der vorliegenden Erfindung.

Die Bezugszeichen 23 sowie 23' kennzeichnen einen ersten bzw. zweiten endseitigen Strömungsverbindungsabschnitt. Das Bezugszeichen 26 kennzeichnet einen Rohrabschnitt der Durchflußeinrichtung. Der endseitige Strömungsverbindungsabschnitt 23 und der endseitige Strömungsverbindungsabschnitt 23' sind, wie sich aus der Darstellung ersichtlich, jeweils einmal tordiert. In der hier vorliegenden Darstellung liegt eine Torsion um einen Torsionswinkel von 90 Grad vor. Grundsätzlich sind aber Torsionswinkel von 0 bis 90 Grad in beide Richtungen denkbar. In Fig. 3 sind die beiden Strömungsverbindungsabschnitte in gleicher Richtung tordiert.

Es ist jedoch auch möglich, die Torsionen in unterschiedlicher Richtung durchzuführen.

Die Breite b der Durchflußeinrichtung liegt zwischen 4 mm und 20 mm, bevorzugt zwischen 5 mm und 12mm und, besonders bevorzugt, zwischen 6 mm und 9 mm. Die Dicke d der Durchflußeinrichtung liegt zwischen 1 mm und 3 mm, bevorzugt zwischen 1,2 mm und 2,2 mm und besonders bevorzugt zwischen 1,5 mm und 2 mm.

Abbildung 3 zeigt eine schematische Darstellung des Querschnitts der Durchflußeinrichtung 7 im Bereich eines endseitigen Strömungsverbindungsabschnittes 23. Die dargestellte Durchflußeinrichtung weist dabei mehrere Strömungskanäle 27 auf.

Weiterhin dient Figur 3 der Veranschaulichung der Torsionen. Im hier gezeigten Beispiel erfolgte eine Torsion der Durchflußeinrichtung in Richtung der positiven z-Achse um 90° entgegen dem Uhrzeigersinn, also eine Drehung um einen Torsionswinkel β von -90°.Mit dieser Definition weisen die in Figur gezeigten Torsionen der beiden endseitigen Strömungsverbindungsabschnitte 23 und 23' einen Torsionswinkel mit einem Betrag von 90° und einem negativen Vorzeichen, also von -90° auf.

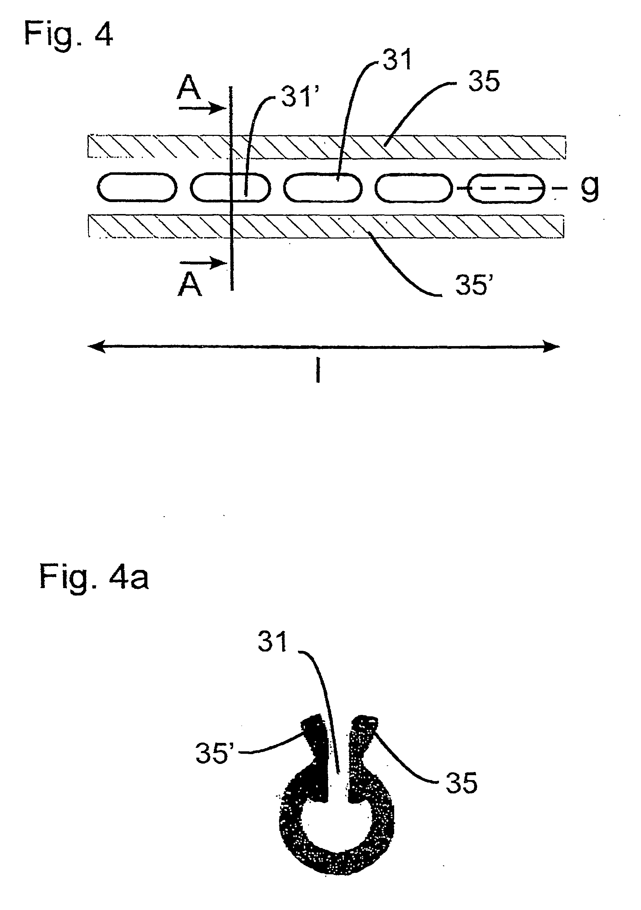

Figur 4 zeigt eine schematische Darstellung eines Ausschnitts eines Verteilungs- bzw. Sammelraums. Der Verteilungs- bzw. Sammelraum weist eine Vielzahl von Aufnahmeeinrichtungen 31 bzw. 31' auf. Diese Aufnahmeeinrichtungen dienen zur Aufnahme bzw. zur Durchführung der Durchflußeinrichtüng 7. Dabei entspricht der Innendurchmesser dieser Durchführungseinrichtungen im wesentlichen dem Außenquerschnitt der Durchflußeinrichtung 7 an deren Ende und ist bevorzugt geringfügig größer. Bei der Herstellung werden die Endabschnitte der Durchflußeinrichtung in die Aufnahmeeinrichtungen 31 bzw. 31' eingeschoben bzw. durch diese hindurchgeschoben. Anschließend werden die Aufnahmeeinrichtungen und die Durchflußeinrichtungen z.B. mittels Lot, Klebstoff oder dergleichen fluiddicht verbunden.

Die Verbindung zwischen den Durchflußeinrichtungen und den Aufnahmeeinrichtungen des Sammel- bzw. Verteilungsraums bringt den Vorteil, daß auch die hohen Drücke von beispielsweise bis ca. 400 bar, welche bei Kohlendioxidkühlern erforderlich sind, aufgenommen werden können und die Strömungswege auch bei diesen hohen Drücken noch gas- und/oder flüssigkeitsdicht sind.

In einer bevorzugten Ausführungsform wird die Einstecktiefe der Durchflußeinrichtungen in den Sammel- bzw. Verteilungsraum durch die Torsion des endseitigen Strömungsverbindungsabschnittes begrenzt. Es ist jedoch auch möglich, daß die Durchflußeinrichtungen bis zum Anschlag der Rohre an den Begrenzungswänden des Verteilungs- bzw. Sammelraums eingeschoben werden. Die Einstecktiefe ist unter anderem abhängig vom Fertigungsverfahren, Materialstärke, vorgegebenen Toleranzen, usw.. Die Einstecktiefe liegt normalerweise zwischen 1 mm und 25 mm, bevorzugt zwischen 2 mm und 15 mm und besonders bevorzugt zwischen 3 mm und 10 mm.

Die einzelnen Aufnahmeeinrichtungen 31 und 31' sind entlang der Längsrichtung 1 des Aufnahme- bzw. des Sammelraums angeordnet, d. h. deren Längsrichtung, welche durch die gestrichelt gezeichnete Strecke g angedeutet ist, schließt mit der Längsrichtung 1 einen Winkel ein, der dem Betrage nach unter 10 Grad liegt, bevorzugt im wesentlichen 0° beträgt d.h. parallel ist. Es ist jedoch auch möglich, die Aufnahmeeinrichtungen unter einem anderem Winkel bis zu 90° gegenüber der Längsrichtung anzuordnen.

Fig. 4a zeigt einen Schnitt aus Fig. 4 entlang der Linie A-A'. Die Bezugszeichen 35 und 35' kennzeichnen die Klemmwände, die zum Einklemmen des Strömungsverbindungsabschnittes verwendet werden. Das Bezugszeichen 31 zeigt die Aufnahmeeinrichtung, die sich in dieser Schnittdarstellung spaltförmig darstellt. Wie aus Fig. 4a ersichtlich weist der Strömungsverbindungsabschnitt einen in etwa Ω-förmigen Querschnitt auf.

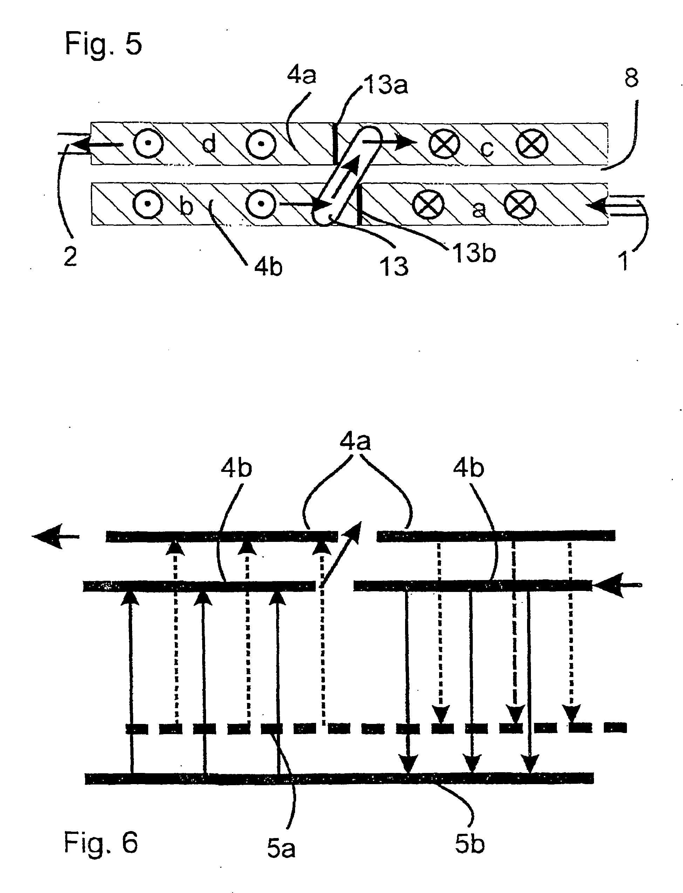

Fig. 5 zeigt eine Seitenansicht der Vorrichtung zum Austausch von Wärme gemäß der vorliegenden Erfindung. Die Bezugszeichen 4a und 4b kennzeichnen zwei Sammel- bzw. Verteilungsräume welche Bestandteil zweier unterschiedlicher Wärmetauschereinheiten sind. In einer bevorzugten Ausführungsform berühren sich die beiden Sammel- und Verteilungsräume nicht direkt, sondern sind voneinander beabstandet, was durch das Bezugszeichen 8 angedeutet wird. Die Bezugszeichen 1 und 2 beziehen sich auf eine Zu- und eine Ableitung für das Kältemittel. Es ist aber vorstellbar für die beiden Wärmeübertragereinheiten eine gemeinsame Wellrippe zu verwenden.

In einer bevorzugten Ausführungsform erfolgt eine Strömungsverbindung des Sammelraums mit dem Verteilungsraum über die steg- bzw. brückenartige Strömungsverbindungsseinrichtung 13.

Unter steg- bzw. brückenartig wird dabei verstanden, daß die Strömungsverbindung nicht ausschließlich innerhalb einer Verteilungs- bzw. Sammeleinrichtung zustande kommt, sondern im wesentlichen außerhalb derselben, in Fig. 5 z.B. oberhalb derselben verläuft.

Daneben sind Trenneinrichtungen 13a und 13b vorgesehen, die die Verteilungs- bzw. Sammelräume 4a und 4b in jeweils zwei getrennte Teilräume a und b bzw. c und d unterteilen. Vorzugsweise ist die Länge des Teilraums a kleiner als die Länge des Teilraums c und/oder größer oder gleich der Länge des Teilraums d. Die Länge des Teilraums b ist vorzugsweise kleiner oder gleich der Länge des Teilraums c. Die Länge des Teilraums d ist vorzugsweise kleiner als die Längen der Teilräume b und/oder c.

Alternativ, kann jedoch die Strömungsverbindungseinrichtung 13 auch mit den Trenneinrichtungen 13a und 13b kombiniert werden und in vorbereitete Schlitze der Verteilungs- bzw. Sammelräume 4a und 4b eingeschoben werden. Die Trenneinrichtung wird in diesem Fall vorzugsweise mit dem Verteilungs- bzw. Sammelraum verlötet bzw. verschweißt oder auf andere Weise fluiddicht zur Umgebung verbunden.

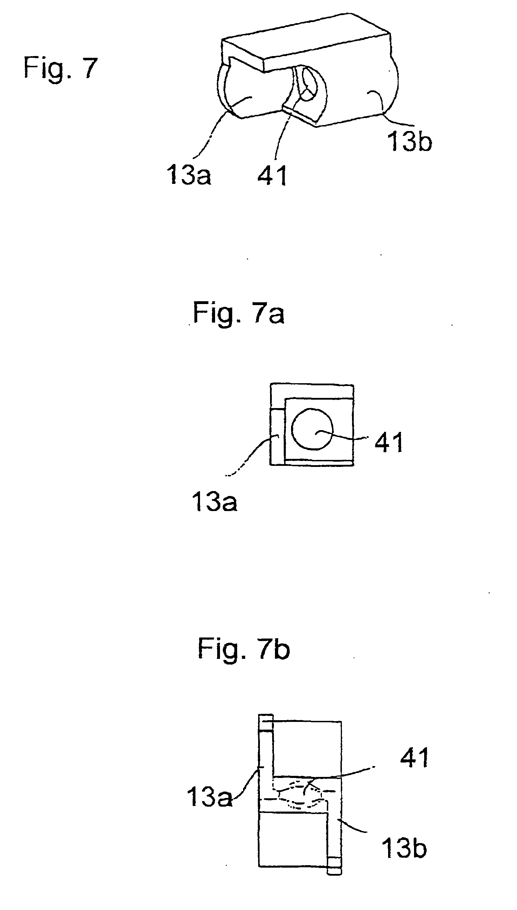

Fig. 7 zeigt eine perspektivische Darstellung einer kombinierten Strömungsverbindungs- / Trenneinrichtung. Die Bezugszeichen 13a und 13a beziehen sich dabei auf die Trennelemente der Einrichtung, das Bezugszeichen 41 kennzeichnet eine Strömungsverbindungsöffnung.

Die Fig. 7a und 7b zeigen weitere Ansichten der in Fig. 7 gezeigten kombinierten Strömungsverbindungs-/Trenneinrichtungen.

Unter Bezugnahme auf die Figuren 5 und 6 werden nachfolgend die Strömungswege in der Vorrichtung zum Austausch von Wärme gemäß dieser Ausführungsform erläutert.

Das Kältemittel gelangt zunächst über die Zuleitung 1 in den Raumabschnitt a des Verteilungs- bzw. Sammelraums 4b. Dort kann es sich entlang der Längsrichtung 1 des Verteilungs- bzw. Sammelraums 4b bis zu der Trenneinrichtung 13b ausbreiten. Von dort strömt das Kältemittel über die (nicht gezeigten) Durchflusseinrichtungen 7, 7',7 " ... nach unten, d.h. in der Zeichnung in die Blattebene hinein, was durch die x - Symbole dargestellt ist. In dem in Fig. 4 gezeigten Pfeildiagramm wird dies durch die durchgezogenen nach unten weisenden Pfeile im rechten Teil der Zeichnung dargestellt.

Der untere Verteilungs- bzw. Sammelraum 5b weist keine Trenneinrichtung auf, weshalb sich hier das Kältemittel entlang dessen gesamter Länge ausbreiten kann. In diesem Fall fungiert daher der rechte Teil dieses Raums als Sammelraum, der linke Teil als Verteilungsraum. In Fig. 6 kommt dies dadurch zum Ausdruck, daß die den Verteilungs- bzw. Sammelraum 5b symbolisierende Linie nicht unterbrochen dargestellt ist.

Von dem linken Abschnitt des unteren Verteilungs- bzw. Sammelraums 5b aus strömt das Kältemittel durch die Durchflußeinrichtungen wieder nach oben, was durch die durchgezogenen, nach oben gerichteten Pfeile auf der linken Seite der Fig. 4 symbolisiert wird. Das Kältemittel gelangt in den mit b bezeichneten Abschnitt in Fig. 5. Dies wird in der Figur durch die mit dem Punkt versehenen Symbole angedeutet.

Von dem Teilraum b aus fließt das Kältemittel über die Strömungsverbindungseinrichtung 13 in den mit c gekennzeichneten Teilraum des Verteilungs- und Sammelraumes 4a. Über die Durchflusseinrichtungen gelangt das Kältemittel in den (in Fig. 6 gezeigten) unteren Verteilungs- Sammelraum 5a, d.h. das Kältemittel fließt in Figur 5 in einer Richtung senkrecht zur Blattebene, was durch die x- Symbole in Fig. 5 sowie durch die nach unten gerichteten gestrichelten Pfeile in Fig. 6. veranschaulicht ist. Im unteren Verteilungs- Sammelraum breitet sich das Kältemittel wieder entlang dessen gesamter Länge aus und gelang schließlich wieder über die Durchflußeinrichtungen in den Abschnitt d des Verteilungs- und Sammelraumes 4a. Von dort fließt das Kältemittel über die Ableitung 2 aus der Vorrichtung ab.

Durch diese Konstruktion wird erreicht, daß das Kältemittel zunächst im wesentlichen sämtliche Durchflusseinrichtung einer Wärmetauschereinheit durchströmt und anschließend im wesentlichen sämtliche Durchflusseinrichtungen der zweiten Wärmetauschereinheit. Des weiteren wird erreicht, daß das Kältemittel nicht die Durchflusseinrichtungen einer Wärmetauschereinheit im wesentlichen zeitgleich durchströmt, sondern abschnittsweise, wobei die Abschnitte durch die Trenneinrichtungen bestimmt werden. Auf diese Weise kann eine gleichmäßigere Kühlung des umströmenden Mediums im Bereich der gesamten Fläche der Durchflusseinrichtungen erreicht werden.

Weiterhin können auch mehrere Trenneinrichtungen und/oder mehrere Durchflusseinrichtungen vorgesehen sein, um zu erreichen, daß die Vorrichtung bzw. die Wärmetauschereinheiten in mehreren Abschnitten durchströmt werden. Eine größere Anzahl von Strömungsverbindungseinrichtungen kann auch dazu dienen, mehr als zwei Wärmetauschereinheiten hintereinander anzuordnen.

## Patentansprüche

1. Vorrichtung zum Austausch von Wärme, insbesondere für den Einsatz in Kraftfahrzeugen und insbesondere für den Einsatz in Kraftfahrzeugklimaanlagen, die als Kältemittel ein Fluid aufweisen,
wenigstens einer Zu- und Ableitung (1,2) um das Fluid in die Vorrichtung einzuleiten bzw. um das Fluid aus der Vorrichtung abzuleiten;
wenigstens zwei Wärmetauschereinheiten, wobei jede dieser Wärmetauschereinheiten
wenigstens zwei in Einbaulage im wesentlichen horizontal ausgerichtete Verteilungs- bzw. Sammelräume (4a, 5a, 4b, 5b) und
wenigstens eine Durchflußeinrichtung (7) aufweist, wobei das Fluid durch die Durchflusseinrichtung (7) zwischen den wenigstens zwei Verteilungs- bzw. Sammelräumen (4a, 5a, 4b, 5b) fließen kann, und
wenigstens einer Trenneinrichtung (13a), welche wenigstens einen Verteilungs- bzw.- Sammelraum in einem mittigen Bereich in zwei Teilräume (a, b, c, d) unterteilt,
wenigstens einer Strömungsverbindungseinrichtung (13), welche die Wärmetauschereinheiten derart miteinander verbindet, daß das Kältemittel zwischen den Wärmetauschereinheiten fließen kann, wobei die Srömungsquerschnitte vor und nach der Strömungsverbindungseinrichtung ein vorgegebenes Verhältnis zueinander annehmen, **dadurch gekennzeichnet, dass** die Strömungsverbindungseinrichtung (13) zu den Trenneinrichtungen (13a) benachbart ist.

2. Vorrichtung zum Austausch von Wärme nach Anspruch 1,
**dadurch gekennzeichnet, daß**
die Durchflußeinrichtung (7) wenigstens einen ersten endseitigen Strömungsverbindungsabschnitt (23) aufweist, durch welchen das Kältemittel in die Durchflußeinrichtung (7) eintritt bzw. aus der Durchflusseinrichtung (7) austritt, sowie einen zweiten endseitigen Strömungsverbindungsabschnitt (23'), durch welchen das Kältemittel aus der Durchflusseinrichtung (7) austritt bzw. in die Durchflußeinrichtung (7) eintritt, und daß der erste Strömungsverbindungsabschnitt (23) und der zweite Strömungsverbindungsabschnitt (23') miteinander durch wenigstens einen Rohrabschnitt (26) strömungsverbunden sind.

3. Vorrichtung zum Austausch von Wärme nach Anspruch 2,
**dadurch gekennzeichnet, daß**
der Rohrabschnitt (26) wenigstens einen geraden Abschnitt aufweist.

4. Vorrichtung zum Austausch von Wärme nach Anspruch 2 oder 3,
**dadurch gekennzeichnet, daß**
der Rohrabschnitt (26) wenigstens einen gekrümmten Abschnitt aufweist.

5. Vorrichtung zum Austausch von Wärme nach einem der Ansprüche 2-4,
**dadurch gekennzeichnet, daß**
wenigstens ein Strömungsverbindungsabschnitt (23, 23') einen tordierten Abschnitt aufweist.

6. Vorrichtung zum Austausch von Wärme nach Anspruch 5
**dadurch gekennzeichnet, daß**
der Torsionswinkel seinem Betrag nach zwischen 10° und 180°, vorzugsweise zwischen 45° und 135° und besonders bevorzugt zwischen 80° und 100° liegt.

7. Vorrichtung zum Austausch von Wärme nach wenigstens einem der vorstehenden Ansprüche,
**dadurch gekennzeichnet, daß**
die Durchflußeinrichtung wenigstens einen Strömungskanal (27), vorzugsweise eine Mehrzahl von Strömungskanälen zur Weiterleitung des Kältemittels aufweist.

8. Vorrichtung zum Austausch von Wärme nach wenigstens einem der vorstehenden Ansprüche,
**dadurch gekennzeichnet, daß**
mehrere Durchflusseinrichtungen (7) vorgesehen sind und zwischen diesen Durchflußeinrichtungen (7) Einrichtungen zum Austausch von Wärme, wie z. B. Kühlrippen (10), vorgesehen sind.

9. Vorrichtung zum Austausch von Wärme nach Anspruche 8,
**dadurch gekennzeichnet, daß**
die Durchflußeinrichtungen (7) im wesentlichen parallel zueinander angeordnet sind.

10. Vorrichtung zum Austausch von Wärme, nach wenigstens einem der vorstehenden Ansprüche,
**dadurch gekennzeichnet, daß**
die Durchflusseinrichtung (7) einen flachrohrartigen Querschnitt hat.

11. Vorrichtung zum Austausch von Wärme nach wenigstens einem der vorstehenden Ansprüche,
**dadurch gekennzeichnet, daß**
die Wärmetauschereinheiten bevorzugt paarweise durch Strömungsverbindungseinrichtungen (13) verbunden sind.

12. Vorrichtung zum Austausch von Wärme nach wenigstens einem der vorstehenden Ansprüche,
**dadurch gekennzeichnet, daß**
die Anzahl der Wärmetauschereinheiten n beträgt und die Anzahl der Strömungsverbindungseinrichtungen n-1.

13. Vorrichtung zum Austausch von Wärme nach wenigstens einem der vorstehenden Ansprüche
**dadurch gekennzeichnet, daß**
mehrere Trenneinrichtungen (13a, 13b) vorgesehen sind, welche die Verteilungs- bzw. Sammelräume in mehrere Teilräume unterteilen.

14. Vorrichtung zum Austausch von Wärme nach wenigstens einem der vorstehenden Ansprüche,
**dadurch gekennzeichnet, daß**
die Zuleitung (1) und die Ableitung (2) für das Kältemittel an unterschiedlichen Verteilungs- bzw. Sammelräumen (4a, 4b) angeordnet sind.

15. Vorrichtung zum Austausch von Wärme nach wenigstens einem der vorstehenden Ansprüche,
**dadurch gekennzeichnet, daß**
sich die Zuleitung (1) und die Ableitung (2) für das Kältemittel entlang der Längsrichtung der Verteilungs- bzw. Sammelräume (4a, 4b) erstrecken, an denen sie angeordnet sind.

16. Vorrichtung zum Austausch von Wärme nach wenigstens einem der vorstehenden Ansprüche,
**dadurch gekennzeichnet, daß**
die einzelnen Wärmetauschereinheiten insbesondere durch eine Rahmeneinrichtung (11) miteinander kraft-, form- und/oder stoffschlüssig verbunden sind.

17. Vorrichtung zum Austausch von Wärme, nach wenigstens einem der vorstehenden Ansprüche,
**dadurch gekennzeichnet, daß**
wenigstens einer der Verteilungs- und Sammelräume Aufnahmeeinrichtungen (31) aufweist, wobei der Innenquerschnitt der Aufnahmeeinrichtungen (31) im wesentlichen dem Außenquerschnitt der Durchflusseinrichtung (7) entspricht.

18. Vorrichtung zum Austausch von Wärme nach Anspruch 17,
**dadurch gekennzeichnet, daß**
die Aufnahmeeinrichtungen (31) eine im wesentlichen rechteckige Gestalt aufweisen und die längere Seite dieser Aufnahmeeinrichtungen (31) zu der Längsrichtung der Verteilungs- und Sammelräume (4a, 4b, 5a, 5b) in einem vorbestimmten Winkel angeordnet ist.

19. Vorrichtung zum Austausch von Wärme, nach Anspruch 18,
**dadurch gekennzeichnet, daß**
der Winkel dem Betrag nach zwischen 0 Grad und 90 Grad, vorzugsweise zwischen 0 Grad und 45 Grad und besonders bevorzugt zwischen 0 Grad und 10 Grad liegt.

20. Vorrichtung zum Austausch von Wärme nach wenigstens einem der vorstehenden Ansprüche,
**dadurch gekennzeichnet, daß**
die Durchflusseinrichtung (7) wenigstens aus einem Material aus einer Gruppe von Materialien hergestellt ist, welche Metalle, insbesondere Aluminium, Mangan, Silizium, Magnesium, Eisen, Messing, Kupfer, Zinn, Zink, Titan, Chrom, Molybdän, Vanadium, Silizium, Magnesium und Legierungen wie EN-AW 3003, EN-AW 3102, EN-AW 6060, EN-AW 1110 hieraus, Kunststoffe, faserverstärkte Kunststoffe, Verbundwerkstoffe enthält.

21. Vorrichtung zum Austausch von Wärme nach wenigstens einem der vorstehenden Ansprüche,
**dadurch gekennzeichnet, daß**
wenigstens Wärmetauschereinheiten voneinander thermisch getrennt sind.

22. Vorrichtung zum Austausch von Wärme nach Anspruch 21,
**dadurch gekennzeichnet, daß**
zwischen den wenigstens zwei Wärmetauschereinheiten ein Material angebracht ist, welches eine thermische Trennung zwischen den Wärmetauschereinheiten bewirkt und die Wärmetauschereinheiten über dieses Material stoffschlüssig miteinander verbunden sind.

23. Vorrichtung zum Austausch von Wärme nach wenigstens einem der vorstehenden Ansprüche,
**dadurch gekennzeichnet, daß**
wenigstens zwei Wärmetauschereinheiten mittels einer Rahmeneinrichtung (11) beabstandet gehalten werden.

24. Vorrichtung zum Austauschen von Wärme insbesondere für Kraftfahrzeugklimaanlagen mit Luftströmungswegen, Luftströmungssteuerelementen, wenigstens einer Luftfördereinrichtung und einem Gehäuse, innerhalb dessen eine Vorrichtung zum Austausch von Wärme gemäß wenigstens einem der vorstehenden Ansprüche angeordnet ist.

25. Einrichtung zum Austausch von Wärme, insbesondere für Kraftfahrzeugklimaanlagen mit wenigstens einem Kondensator, einem Verdichter, einem Expansionsventil, einem Sammler und wenigstens einer Vorrichtung zum Austausch von Wärme gemäß wenigstens einem der vorstehenden Ansprüche.

## Claims

1. A device for exchanging heat, in particular for use in motor vehicles and in particular for use in motor vehicle air conditioning systems which use a fluid as the refrigerant,
- having at least one feed/discharge line (1, 2) to introduce the fluid into the device and to carry off the fluid from the device,
- having at least two heat exchanger units, each of these heat exchanger units itself having
- at least two distribution/collection chambers (4a, 5a, 4b, 5b) which are oriented essentially horizontally when fitted,
- having at least one through-flow device (7), the fluid being able to flow through the through-flow device (7) between the at least two distribution/collection chambers (4a, 5a, 4b, 5b), and
- at least one dividing device (13a) which divides at least one distribution/collection chamber into two part chambers (a, b, c, d) in a central area,
- having at least one flow connection device (13) which connects the heat exchangers together in such a manner that the refrigerant is able to flow between the heat exchanger units, the flow cross sections upstream and downstream of the flow connection device being in a predetermined ratio to one another,
**characterised in that**
the flow connection device (13) is positioned adjacent to the dividing devices (13a).

2. A device for exchanging heat in accordance with claim 1,
**characterised in that**
the flow-through device (7) has on its end face at least one first flow connecting section (23) through which the refrigerant is introduced into the flow-through device (7) and a second flow connecting section (23') through which the refrigerant is carried off from the flow-through device (7), and the first flow connecting section (23) and the second flow connecting section (23') are connected to one another by at least one tube section (26) in such a manner as to ensure a flow.

3. A device for exchanging heat in accordance with claim 2,
**characterised in that**
the tube section (26) has at least one straight section.

4. A device for exchanging heat in accordance with claim 2 or 3,
**characterised in that**
the tube section (26) has at least one curved section.

5. A device for exchanging heat in accordance with one of claims 2 to 4,
**characterised in that**
at least one flow connecting section (23, 23') has a twisted section.

6. A device for exchanging heat in accordance with claim 5,
**characterised in that**
the angle of twisting lies between 10° and 180°, preferably between 45° and 135° and in particular between 80° and 100°.

7. A device for exchanging heat in accordance with at least one of the preceding claims,
**characterised in that**
the through-flow device has at least one flow duct (27) and preferably a plurality of flow ducts for forwarding the refrigerant.

8. A device for exchanging heat in accordance with at least one of the preceding claims,
**characterised in that**
several through-flow devices (7) are provided, provided between these through-flow devices (7) are devices for heat exchanging such as cooling ribs (10), for example.

9. A device for exchanging heat in accordance with claim 8,
**characterised in that**
the through-flow devices (7) are positioned essentially parallel to one another.

10. A device for exchanging heat in accordance with at least one of the preceding claims,
**characterised in that**
the cross section of the through-flow device (7) is in the shape of a flat tube.

11. A device for exchanging heat in accordance with at least one of the preceding claims,
**characterised in that**
the heat exchanger units are preferably connected in pairs by flow connection devices (13).

12. A device for exchanging heat in accordance with at least one of the preceding claims,
**characterised in that**
the number of heat exchanger units is n and the number of flow connection devices is n-1.

13. A device for exchanging heat in accordance with at least one of the preceding claims,
**characterised in that**
several dividing devices (13a, 13b) are provided which divide the distribution/collection chambers (4a, 4b) into several sub-chambers.

14. A device for exchanging heat in accordance with at least one of the preceding claims,
**characterised in that**
the feed (1) and the carry-off (2) for the refrigerant are positioned in different distribution/collection chambers (4a, 4b).

15. A device for exchanging heat in accordance with at least one of the preceding claims,
**characterised in that**
the feed (1) and the carry-off (2) for the refrigerant are positioned along the length of the distribution/collection chambers (4a, 4b) in which they are positioned.

16. A device for exchanging heat in accordance with at least one of the preceding claims,
**characterised in that**
the individual heat exchanger units are connected together non-positively, positively or by a material connection, in particular by a framework arrangement (11).

17. A device for exchanging heat in accordance with at least one of the preceding claims,
**characterised in that**
at least one of the distribution/collection chambers has receiving devices (31), the internal cross section of the receiving devices (31) corresponding essentially to the outer cross section of the through-flow device.

18. A device for exchanging heat in accordance with claim 17,
**characterised in that**
the receiving devices (31) are essentially rectangular in shape and the longer sides of these receiving devices (31) are positioned at a predetermined angle in relation to the longitudinal axes of the distribution/collection chambers (4a, 4b, 5a, 5b).

19. A device for exchanging heat in accordance with claim 18,
**characterised in that**
the angle lies between 0° and 90°, preferably between 0° and 45° and in particular between 0° and 10°.

20. A device for exchanging heat in accordance with at least one of the preceding claims,
**characterised in that**
the through-flow device (7) is made at least of a material from a group of materials which contains metals, in particular aluminium, manganese, silicon, iron, brass, copper, tin, zinc, titanium, chrome, molybdenum, vanadium, silicon, magnesium and alloys such as EN-AW 3003, EN-AW 3102, EN-AW 6060, EN-AW 1110 thereof, plastics, fibre-reinforced plastics and composite materials.

21. A device for exchanging heat in accordance with at least one of the preceding claims,
**characterised in that**
at least two heat exchanger units are thermally separated from one another.

22. A device for exchanging heat in accordance with claim 21,
**characterised in that**
positioned between the at least two heat exchanger units is a material which creates a thermal division between said heat exchanger units, and the heat exchanger units are connected together in a material connection by means of this material.

23. A device for exchanging heat in accordance with at least one of the preceding claims,
**characterised in that**
at least two heat exchanging units are kept apart by means of a framework arrangement (11).

24. A device for exchanging heat, in particular for motor vehicle air conditioning systems with air flow paths, air flow control elements, at least one air ducting device and a housing within which is positioned a device for exchanging heat in accordance with at least one of the preceding claims.

25. A device for exchanging heat, in particular for motor vehicle air conditioning systems with at least one condenser, one compressor, one expansion valve, one collector and at least one device for exchanging heat in accordance with at least one of the preceding claims.

## Revendications

1. Dispositif d'échange de chaleur, destiné à être utilisé en particulier dans des véhicules automobiles et en particulier dans des installations de climatisation de véhicules automobiles, dont le réfrigérant est un fluide, comportant
- au moins une conduite d'admission et une conduite d'évacuation (1, 2) pour introduire le fluide dans le dispositif et pour évacuer le fluide hors du dispositif ;
- au moins deux unités d'échange de chaleur, chacune de ces unités d'échange de chaleur comportant
-- au moins deux espaces de distribution et de collecte (4a, 5a, 4b, 5b) orientés sensiblement horizontalement dans la position de montage, et
-- au moins une unité de circulation (7), le fluide pouvant circuler à travers l'unité de circulation (7) entre lesdits au moins deux espaces de distribution et de collecte (4a, 5a, 4b, 5b), et
-- au moins une unité de séparation (13a), par laquelle au moins un espace de distribution et de collecte est divisé dans une zone centrale en deux espaces partiels (a, b, c, d),
- au moins une unité de raccordement (13), par laquelle les unités d'échange de chaleur sont reliées entre elles de telle sorte que le réfrigérant peut circuler entre les unités d'échange de chaleur, les sections de passage en amont et en aval de l'unité de raccordement étant définies l'une par rapport à l'autre selon un rapport prédéfini,
**caractérisé en ce que** l'unité de raccordement (13) est adjacente aux unités de séparation (13a).

2. Dispositif d'échange de chaleur selon la revendication 1, **caractérisé en ce que** l'unité de circulation (7) comporte au moins un premier segment de raccordement (23) du côté extrémité, par lequel le réfrigérant pénètre dans l'unité de circulation (7), ainsi qu'un deuxième segment de raccordement (23') du côté extrémité, à travers lequel le réfrigérant sort de l'unité de circulation (7) ou entre dans l'unité de circulation (7), et **en ce que** le premier segment de raccordement (23) et le deuxième segment de raccordement (23a) sont reliés en écoulement l'un à l'autre par au moins un tronçon de tube (26).

3. Dispositif d'échange de chaleur selon la revendication 2, **caractérisé en ce que** le tronçon de tube (26) comporte au moins un tronçon droit.

4. Dispositif d'échange de chaleur selon la revendication 2 ou 3, **caractérisé en ce que** le tronçon de tube (26) comporte au moins un tronçon courbe.

5. Dispositif d'échange de chaleur selon au moins l'une des revendications 2 à 4, **caractérisé en ce qu'**au moins un segment de raccordement (23, 23') comporte un tronçon tordu.

6. Dispositif d'échange de chaleur selon la revendication 5, **caractérisé en ce que** la valeur de l'angle de torsion se situe entre 10° et 180°, de préférence entre 45° et 135° et de manière particulièrement préférée entre 80° et 100°.

7. Dispositif d'échange de chaleur selon au moins l'une des revendications précédentes, **caractérisé en ce que** l'unité de circulation comporte au moins un canal d'écoulement (27), de préférence une pluralité de canaux d'écoulement pour acheminer le réfrigérant.

8. Dispositif d'échange de chaleur selon au moins l'une des revendications précédentes, **caractérisé en ce qu'**il est prévu plusieurs unités de circulation (7), et des systèmes pour l'échange de la chaleur, tels que des nervures de refroidissement (10), sont prévus entre ces unités de circulation (7).

9. Dispositif d'échange de chaleur selon la revendication 8, **caractérisé en ce que** les unités de circulation (7) sont disposées sensiblement parallèlement entre elles.

10. Dispositif d'échange de chaleur selon au moins l'une des revendications précédentes, **caractérisé en ce que** l'unité de circulation (7) possède une section en forme de tube plat.

11. Dispositif d'échange de chaleur selon au moins l'une des revendications précédentes, **caractérisé en ce que** les unités d'échange de chaleur sont reliées, de préférence par paires, par des unités de raccordement (13).

12. Dispositif d'échange de chaleur selon au moins l'une des revendications précédentes, **caractérisé en ce que** le nombre d'unités d'échange de chaleur est égal à n et le nombre d'unités de raccordement est égal à n-1.

13. Dispositif d'échange de chaleur selon au moins l'une des revendications précédentes, **caractérisé en ce qu'**il est prévu plusieurs unités de séparation (13a, 13b), par lesquelles les espaces de distribution et de collecte sont divisés en plusieurs espaces partiels.

14. Dispositif d'échange de chaleur selon au moins l'une des revendications précédentes, **caractérisé en ce que** la conduite d'admission (1) et la conduite d'évacuation (2) pour le réfrigérant sont disposées dans différents espaces de distribution et de collecte (4a, 4b).

15. Dispositif d'échange de chaleur selon au moins l'une des revendications précédentes, **caractérisé en ce que** la conduite d'admission (1) et la conduite d'évacuation (2) pour le réfrigérant s'étendent suivant le sens longitudinal le long des espaces de distribution et de collecte (4a, 4b), contre lesquels elles sont agencées.

16. Dispositif d'échange de chaleur selon au moins l'une des revendications précédentes, **caractérisé en ce que** les différentes unités d'échange de chaleur sont reliées entre elles par conjugaison de force, de forme et/ou de matière, en particulier par l'intermédiaire d'un système de cadre (11).

17. Dispositif d'échange de chaleur selon au moins l'une des revendications précédentes, **caractérisé en ce qu'**au moins un des espaces de distribution et de collecte comporte des dispositifs de réception (31), la section intérieure des dispositifs de réception (31) correspondant sensiblement à la section extérieure de l'unité de circulation (7).

18. Dispositif d'échange de chaleur selon la revendication 17, **caractérisé en ce que** les dispositifs de réception (31) ont une forme sensiblement rectangulaire et le grand côté de ces dispositifs de réception (31) est agencé selon un angle prédéterminé par rapport au sens longitudinal des espaces de distribution et de collecte (4a, 4b, 5a, 5b).

19. Dispositif d'échange de chaleur selon la revendication 18, **caractérisé en ce que** la valeur de l'angle se situe entre 0 degré et 90 degrés, de préférence entre 0 degré et 45 degrés et de manière particulièrement préférée entre 0 degré et 10 degrés.

20. Dispositif d'échange de chaleur selon au moins l'une des revendications précédentes, **caractérisé en ce que** l'unité de circulation (7) est réalisée au moins dans un matériau issu d'un groupe de matériaux qui contient des métaux, en particulier l'aluminium, le manganèse, le silicium, le magnésium, le fer, le laiton, le cuivre, l'étain, le zinc, le titane, le chrome, le molybdène, le vanadium, le silicium, le magnésium et des alliages de ceux-ci, tels que EN-AW 3003, EN-AW 3102, EN-AW 6060, EN-AW 1110, des matières plastiques, des matières plastiques renforcées par des fibres, des matériaux composites.

21. Dispositif d'échange de chaleur selon au moins l'une des revendications précédentes, **caractérisé en ce qu'**au moins deux unités d'échange de chaleur sont séparées thermiquement l'une de l'autre.

22. Dispositif d'échange de chaleur selon la revendication 21, **caractérisé en ce qu'**entre lesdites au moins deux unités d'échange de chaleur est disposé un matériau qui assure une séparation thermique entre les unités d'échange de chaleur et les unités d'échange de chaleur sont reliées entre elles par conjugaison de matière par l'intermédiaire de ce matériau.

23. Dispositif d'échange de chaleur selon au moins l'une des revendications précédentes, **caractérisé en ce que** lesdites au moins deux unités d'échange de chaleur sont maintenues à distance l'une de l'autre au moyen d'un système de cadre (11).

24. Dispositif d'échange de chaleur, en particulier pour des installations de climatisation dans des véhicules automobiles, comportant des voies de circulation d'air, des éléments de commande du flux d'air, au moins un dispositif de transport de l'air et un carter, à l'intérieur duquel est agencé un dispositif d'échange de chaleur selon au moins l'une des revendications précédentes.

25. Installation pour l'échange de chaleur, en particulier pour des installations de climatisation dans des véhicules automobiles, comportant au moins un condensateur, un compresseur, une soupape d'expansion, un collecteur et au moins un dispositif d'échange de chaleur selon au moins l'une des revendications précédentes.
